# EUROPÄISCHE PATENTSCHRIFT

(11) **EP 2 192 390 B1**
(45) Veröffentlichungstag und Bekanntmachung des Hinweises auf die Patenterteilung: **16.06.2021**
(21) Anmeldenummer: 09014554.1
(22) Anmeldetag: 23.11.2009
(51) Int. Cl.: G01F 1/58, G01F 15/00, G01N 27/08, G01F 1/00

(54) **Magnetisch-induktives Durchflußmeßgerät**
Magnetic-inductive flow measuring apparatus
Débitmètre à induction magnétique

(30) Priorität: 26.11.2008 DE 102008059067
(43) Veröffentlichungstag der Anmeldung: 02.06.2010
(73) Patentinhaber: Krohne AG, 4019 Basel (CH)
(72) Erfinder: van Willigen, Armoud Leendert, 2901 KC, Capelle aan den Ijssel, (NL)
(74) Vertreter: Gesthuysen Patentanwälte

(56) Entgegenhaltungen:
- EP-A- 0 274 768
- EP-A- 1 764 587
- DE-A1- 2 950 039
- DE-A1- 4 013 634
- DE-A1- 4 243 077
- DE-A1- 4 317 366
- DE-A1-102005 019 418
- DE-A1-102007 005 898
- DE-U1-202004 019 442
- US-A- 4 565 619
- US-A- 5 503 027

## Beschreibung

Die Erfindung betrifft ein magnetisch-induktives Durchflußmeßgerät zur Durchflußmessung eines strömenden Mediums, mit einer Meßleitung, mit einer Magnetfelderzeugungseinrichtung zur Erzeugung eines die Meßleitung wenigstens teilweise durchsetzenden Magnetfeldes und mit zwei Meßelektroden zum Erfassen und Abgreifen einer in dem strömenden Medium induzierten Meßspannung, wobei die Meßleitung innen zumindest teilweise mit einer elektrisch isolierenden Deckschicht versehen ist und wobei die Meßspannung galvanisch oder kapazitiv an den Meßelektroden abgegriffen werden kann. Dabei wird ausgegangen von einem magnetisch-induktiven Durchflußmeßgerät, dessen Meßleitung elektrisch leitend ist, das also eine metallische Meßleitung aufweist; nur dann ist zumindest teilweise eine elektrisch isolierende Deckschicht erforderlich. Diese elektrisch isolierende Deckschicht ist zumindest im Bereich der Meßelektroden vorgesehen. Die Dimension, die die Deckschicht wenigstens haben soll, hängt ab vom Durchmesser der Meßleitung. Üblicherweise hat die Deckschicht in der Längsrichtung der Meßleitung eine Ausdehnung, die etwa mindestens dem doppelten Durchmesser der Meßleitung entspricht. Die Meßleitung kann aber auch dann - teilweise oder ganz - mit einer Deckschicht versehen sein, wenn sie nicht elektrisch leitend ist. Üblicherweise, aber nicht funktionsnotwendig, gehört zu einem magnetisch-induktiven Durchflußmeßgerät der in Rede stehenden Art noch ein die Meßleitung, vorzugsweise auch die Magnetfelderzeugungseinrichtung und die Meßelektroden aufnehmendes Gehäuse, wobei das Gehäuse üblicherweise einen kreisförmigen Querschnitt hat.

Magnetisch-induktive Durchflußmeßgeräte sind sehr umfangreich im Stand der Technik seit Jahrzehnten bekannt; dazu wird exemplarisch auf die Literaturstelle "Technische Durchflußmessung" von Prof. Dr.-Ing. K. W. Bonfig, 3. Auflage, Vulkan-Verlag Essen, 2002, Seiten 123 bis 167, verwiesen (vgl. auch die deutschen Offenlegungsschriften 196 37 761, 197 52 368 und 10 2007 003 614 sowie die europäischen Offenlegungsschriften 0 274 768, 0 762 084 und 1 764 587).

Das grundlegende Prinzip eines magnetisch-induktiven Durchflußmeßgeräts zur Durchflußmessung eines strömenden Mediums geht auf Faraday zurück, der bereits im Jahre 1832 vorgeschlagen hat, das Prinzip der elektrodynamischen Induktion zur Messung der Strömungsgeschwindigkeit eines strömenden Mediums anzuwenden. Nach dem faraday'schen Induktionsgesetz entsteht in einem strömenden Medium, das Ladungsträger mit sich führt und durch ein Magnetfeld hindurchfließt, eine elektrische Feldstärke senkrecht zur Strömungsrichtung und senkrecht zum Magnetfeld. Das faraday'sche Induktionsgesetz wird bei magnetisch-induktiven Durchflußmeßgeräten dadurch ausgenutzt, daß mittels einer Magnetfelderzeugungseinrichtung, die üblicherweise zwei bestromte Magnetspulen aufweist, ein Magnetfeld erzeugt und wenigstens teilweise durch eine Meßleitung geführt wird, wobei das erzeugte Magnetfeld wenigstens eine Komponente aufweist, die senkrecht zur Strömungsrichtung verläuft. Innerhalb des Magnetfeldes liefert jedes sich durch das Magnetfeld bewegende und eine gewisse Anzahl von Ladungsträgern aufweisende Volumenelement des strömenden Mediums mit der in diesem Volumenelement entstehenden Feldstärke einen Beitrag zu einer von den Meßelektroden erfaßbaren und - galvanisch oder kapazitiv - abgreifbaren Meßspannung.

Sind, wie weiter oben ausgeführt, magnetisch-induktive Durchflußmeßgeräte seit Jahrzehnten umfangreich und in einer kaum noch überschaubaren Vielzahl von Ausführungsformen bekannt, so sind auch in bezug auf magnetisch-induktive Durchflußmeßgeräte, wie in vielen weitgehend entwickelten Gebieten der Technik, immer noch Fortschritte erwünscht und auch möglich. Das gilt auch und in besonderem Maße in bezug auf die Meßelektroden solcher magnetisch-induktiver Durchflußmeßgeräte.

Bei magnetisch-induktiven Durchflußmeßgeräten der in Rede stehenden Art kann das strömende Medium eine gasfreie oder zumindest weitgehend gasfreie Flüssigkeit sein, bei dem strömenden Medium kann es sich jedoch auch um eine Flüssigkeit handeln, die mehr oder weniger Gasanteile enthält. Im übrigen kann bei den in Rede stehenden magnetisch-induktiven Durchflußmeßgeräten die Meßleitung betriebsmäßig vollständig gefüllt oder auch nur teilweise gefüllt sein.

Einleitend ist gesagt worden, daß die Erfindung ein magnetisch-induktives Durchflußmeßgerät zur Durchflußmessung eines strömenden Mediums betrifft. Ein solches magnetisch-induktives Durchflußmeßgerät erlaubt aber nicht nur die Durchflußmessung eines strömenden Mediums, vielmehr auch eine Leitfähigkeitsmessung und/oder eine Füllstandsmessung, wobei mit der Füllstandsmessung eine Aussage darüber gewonnen werden kann, ob die Meßleitung vollständig oder nur teilweise gefüllt ist (siehe zum Beispiel DE 43 17 366 A1 oder DE 42 43 077 A1). Folglich kann ein magnetisch-induktives Durchflußmeßgerät der eingangs beschriebenen Art zur Durchflußmessung, zur Leitfähigkeitsmessung und/oder zur Füllstandsmessung verwendet werden. Üblicherweise werden magnetisch-induktive Durchflußmeßgeräte nicht nur für eine Leitfähigkeitsmessung und nicht nur für eine Füllstandsmessung eingesetzt. Wird vielmehr auch eine Leitfähigkeitsmessung und/oder eine Füllstandsmessung vorgesehen, so dient ein magnetisch-induktives Durchflußmeßgerät der in Rede stehenden Art in der Regel für eine Durchflußmessung und eine Leitfähigkeitsmessung, für eine Durchflußmessung und eine Füllstandsmessung oder für eine Durchflußmessung, eine Leitfähigkeitsmessung und eine Füllstandsmessung. Möglich ist es jedoch auch, ein solches magnetisch-induktives Durchflußmeßgerät auch nur für eine Leitfähigkeitsmessung, nur für eine Füllstandsmessung oder nur für eine Leitfähigkeitsmessung und eine Füllstandsmessung einzusetzen. Nachfolgend wird aber immer von einem magnetisch-induktiven Durchflußmeßgerät zur Durchflußmessung eines strömenden Mediums ausgegangen. Dessen ungeachtet gilt das, was nachfolgend ausgeführt wird, auch stets für ein magnetisch-induktives Durchflußmeßgerät zur Durchflußmessung und zur Leitfähigkeitsmessung, zur Durchflußmessung und zur Füllstandsmessung, zur Durchflußmessung, zur Leitfähigkeitsmessung und zur Füllstandsmessung, zur Leitfähigkeitsmessung, zur Füllstandsmessung oder zur Leitfähigkeitsmessung und zur Füllstandsmessung.
Magnetisch-induktive Durchflußmeßgeräte, bei denen die Meßleitung zumindest teilweise eine elektrisch isolierende Deckschicht aufweist, sind vielfach bekannt (vergleiche die deutschen Offenlegungsschriften 10 2004 057 696, 10 2006 026 310 und 10 2006 026 311, die deutsche Patentschrift 43 27 826 und die europäische Offenlegungsschrift 0 608 793). Als Material für die Deckschicht, die eine Schichtdicke im Bereich von 0,1 bis 500 µm haben kann, gegebenenfalls auch darüber hinaus, werden in der Regel Kunststoffe verwendet, z. B. Polyurethan, Polyolefin, Polytetrafluorethylen oder Polyetheretherketon. Im übrigen ist es bei magnetisch-induktiven Durchflußmeßgeräten auch bekannt, zwischen der Meßleitung und der Deckschicht, häufig auch als Liner bezeichnet, einen die Haftung der Deckschicht an der Meßleitung vermittelnden Primer vorzusehen, wobei als Primer auch ein Kunststoff - gleicher oder anderer Art - verwendet werden kann.
Weiter oben ist bereits ausgeführt, daß trotz der Tatsache, daß magnetisch-induktive Durchflußmeßgeräte seit Jahrzehnten umfangreich und in einer kaum noch überschaubaren Vielzahl von Ausführungsformen bekannt sind, auch in bezug auf magnetisch-induktive Durchflußmeßgeräte immer noch Fortschritte erwünscht und auch möglich sind, was in besonderem Maße auch in bezug auf die Meßelektroden solcher magnetisch-induktiver Durchflußmeßgeräte gilt. Folglich liegt der Erfindung die Aufgabe zugrunde, die bekannten magnetisch-induktiven Durchflußmeßgeräte, von denen die Erfindung ausgeht, in bezug auf die funktionsnotwendigen Meßelektroden verbessernd auszugestalten und weiterzubilden.

Eine bevorzugte Ausführungsform eines erfindungsgemäßen magnetisch-induktiven Durchflußmeßgeräts der eingangs beschriebenen Art ist durch den Patentanspruch 1 definiert. Die Erfindung beinhaltet, daß die Meßelektroden streifenartig ausgeführt sind, eine Länge - in Umfangsrichtung der Meßleitung - von etwas weniger als einem Viertel des Meßleitungsumfangs bis etwas mehr als der Hälfte des Meßleitungsumfangs haben und direkten, d. h. elektrisch leitenden, also galvanischen Kontakt zum strömenden Medium haben. Eine solche Ausführungsform hat gegenüber den im Stand der Technik bekannten Ausführungsformen funktionale, insbesondere aber konstruktive und herstellungstechnische Vorteile. Das gilt insbesondere dann, aber nicht nur, wenn nach einer weiteren Lehre der Erfindung, der auch für sich, also losgelöst von dem, was zuvor ausgeführt worden ist, besondere Bedeutung zukommt, die Meßelektroden aus dem gleichen Material oder einem gleichartigen Material wie die Deckschicht bestehen und das Material der Meßelektroden eine wesentlich höhere elektrische Leitfähigkeit hat als das Material der Deckschicht.

Meßelektroden, die aus dem gleichen Material oder einem gleichartigen Material wie die Deckschicht bestehen, jedoch mit wesentlich höherer elektrischer Leitfähigkeit, sind zum Beispiel aus DE 40 13 634 A1 und DE 29 50 039 A1 bekannt. Es handelt sich dabei jedoch nicht um streifenartig ausgeführte Meßelektroden.

Weiter oben ist ausgeführt, daß als Material für die Deckschicht in der Regel Kunststoffe verwendet werden, z. B. Polyurethan, Polyolefin, Polytetrafluorethylen oder Polyetheretherketon. Wenn zuvor eine besondere Lehre der Erfindung dahingehend beschrieben ist, daß die Meßelektroden aus dem gleichen Material oder einem gleichartigen Material wie die Deckschicht bestehen, so muß das - klarstellend bzw. einschränkend - natürlich dahingehend verstanden werden, daß sowohl bei gleichem Material als auch bei gleichartigem Material auch realisiert sein muß, daß das Material der Meßelektroden eine wesentliche höhere elektrische Leitfähigkeit hat als das Material der Deckschicht. Gleiches Material kann hier also nicht absolut identisches Material meinen.
Für die zuvor erläuterte Lehre der Erfindung, der, wie gesagt, besondere Bedeutung zukommt, ist, wie ausgeführt, auch wesentlich, daß das Material der Meßelektroden eine wesentlich höhere elektrische Leitfähigkeit hat als das Material der Deckschicht. Die notwendige höhere elektrische Leitfähigkeit des Materials der Meßelektroden gegenüber der elektrischen Leitfähigkeit des Materials der Deckschicht kann durch eine besondere chemische und/oder physikalische Behandlung erreicht werden.

Bisher ist nur darauf abgestellt worden, daß das Material der Meßelektroden eine wesentlich höhere elektrische Leitfähigkeit haben muß als daß Material der Deckschicht. Notwendig ist aber auch, daß die elektrische Leitfähigkeit des Materials der Meßelektroden wesentlich höher ist als die elektrische Leitfähigkeit des strömenden Mediums, vorzugsweise um etwa das Zweifache bis etwa das Zehnfache. Dabei ist auslegungsmäßig zu berücksichtigen, mit welcher elektrischen Leitfähigkeit in dem strömenden Medium zu rechnen ist. Die elektrische Leitfähigkeit beträgt bei Trinkwasser etwa 500 µScm und bei Abwasser etwa 5000 µScm.
Weiter oben ist bereits darauf hingewiesen worden, daß bei bekannten magnetisch-induktiven Durchflußmeßgeräten als Material für die Deckschicht in der Regel Kunststoffe verwendet werden, z. B. Polyurethan, Polyolefin, Polytetrafluorethylen oder Polyetheretherketon. Solche Materialien können auch bei dem erfindungsgemäßen magnetisch-induktiven Durchflußmeßgerät für die Deckschicht der Meßleitung verwendet werden.

Als Material für die Meßelektroden kann grundsätzlich ein Polymer verwendet werden, z. B. Polyurethan (PUR), Polyamid (PA), Polyethylen / Polyethen (PE), Polypropylen / Polypropeen (PP), oder ein unter der Marke Teflon bekannter Kunststoff (PFA, PTFE, ETFE).

Wesentlich für die weiter oben erläuterte Lehre der Erfindung, der besondere Bedeutung zukommt, ist, daß das Material der Meßelektroden eine wesentliche höhere elektrische Leitfähigkeit hat als das Material der Deckschicht. Dies zu erreichen, gibt es eine Mehrzahl von Möglichkeiten. Dazu ist bereits weiter oben darauf hingewiesen, daß die notwendige höhere elektrische Leitfähigkeit des Materials der Meßelektroden gegenüber der elektrischen Leitfähigkeit des Materials der Deckschicht durch eine besondere chemische und/oder physikalische Behandlung erreicht werden kann.

Eine besonders bevorzugte Ausführungsform des erfindungsgemäßen magnetisch-induktiven Durchflußmeßgeräts ist dadurch gekennzeichnet, daß als Material für die Meßelektroden ein Polymer mit extrinsischer Leitfähigkeit oder ein Material mit intrinsischer Leitfähigkeit verwendet ist.

Extrinsische Leitfähigkeit bezeichnet den Anteil der Leitfähigkeit eines Festkörpers, der durch den Einbau von Fremdatomen (äußerer Einfluß ⇒ extrinsisch) in das Kristallgitter hervorgerufen wird (vgl. "Wikipedia, die freie Enzyklopädie"). Das Einbringen von Fremdatomen wird Dotieren genannt. Die Fremdatome bewirken eine Erhöhung der Leitfähigkeit, da sie - je nach Zahl ihrer Valenzelektroden - zusätzliche Leerstellen oder zusätzliche freibewegliche Ladungen in den Festkörper einbringen. Die extrinsische Leitfähigkeit ist bei tiefen Temperaturen nahezu temperaturunabhängig und besteht auch noch bei 0 K.
Intrinsische Leitfähigkeit entsteht dadurch, daß Festkörper (von sich aus ⇒ intrinsisch) dazu neigen, Gitterfehler auszubilden und damit eine Ladungsbewegung, also eine Ionenleitung ermöglichen, also elektrisch leitfähig sind (vgl. "Wikipedia, die freie Enzyklopädie"). In einem Festkörper können Gitterfehler wie z. B. Schottky-Defekte und Frenkel-Defekte auftreten. Sie sind thermodynamisch begünstigt, da sie einen Entropiegewinn bringen. Das System neigt demnach bis zu einem gewissen Grad dazu, Defekte auszubilden. Diese Fehler werden als intrinsische Fehler bezeichnet. Die Defektkonzentration ist temperaturabhängig. Sie steigt mit der Temperatur und hat bei 0 K den Wert Null. Intrinsische Defekte sorgen folglich bei Temperaturen > 0 K für bewegliche Ladungen und damit für eine intrinsische elektrische Leitfähigkeit. Materialien mit elektrischer Leitfähigkeit können sowohl eine extrensische Leitfähigkeit als auch eine intrinsische Leitfähigkeit haben. Bei tiefen Temperaturen dominiert die extrinsische Leitfähigkeit, während sie bei steigender Temperatur von der intrinsischen Leitfähigkeit überdeckt wird (vgl. wieder "Wikipidea, die freie Enzyklopädie").

Bisher ist im wesentlichen abgestellt worden auf die elektrische Leitfähigkeit des Materials der Meßelektroden relativ zur elektrischen Leitfähigkeit der Deckschicht, auf die elektrische Leitfähigkeit des Materials der Meßelektroden relativ zur elektrischen Leitfähigkeit des strömenden Mediums, auf besonders geeignete Materialien für die Meßelektroden und auf die elektrische Leitfähigkeit der Meßelektroden beeinflussende Aspekte. Von Bedeutung für erfindungsgemäße magnetisch-induktive Durchflußmeßgeräte sind aber auch die Form der Meßelektroden, die Anordnung der Meßelektroden relativ zur Deckschicht, Möglichkeiten des Abgreifens der von den Meßelektroden erfaßten Meßspannung sowie geeignete bzw. besonders vorteilhafte Verfahren zur Herstellung der erfindungsgemäßen magnetisch-induktiven Durchflußmeßgeräte. Darauf soll im folgenden eingegangen werden.

Bei bevorzugten Ausführungsformen erfindungsgemäßer magnetisch-induktiver Durchflußmeßgeräte können die Meßelektroden - auf die Meßelektroden in gestreckter, gleichsam "abgewickelter" Form gesehen - eine rechteckige Form oder eine über den Meßleitungsumfang veränderliche Form haben, z. B. eine dreieckige oder eine rhombische Form. Im übrigen können die Meßelektroden einen kreisförmigen, einen elliptischen, einen quadratischen, einen rechteckigen, einen achteckigen oder einen teilweise kreisförmigen und/oder elliptischen und/oder quadratischen und/oder rechteckigen und/oder achteckigen Querschnitt aufweisen. In bezug auf die Form der Meßelektroden ist noch darauf hinzuweisen, daß diese an ihren Enden abgerundet sein können oder in einen kreisförmigen Querschnitt übergehen können und/oder daß sie in Strömungsrichtung des strömenden Mediums einen venturiartigen Querschnitt aufweisen können.
Weiter oben ist ausgeführt worden, daß eine bevorzugte Ausführungsform eines erfindungsgemäßen magnetisch-induktiven Durchflußmeßgeräts auch beinhaltet, daß die Meßelektroden streifenartig ausgeführt sind, eine Länge - in Umfangsrichtung der Meßleitung - von etwas weniger als einem Viertel des Meßleitungsumfangs bis etwas mehr als der Hälfte des Meßleitungsumfangs haben und direkten, d. h. elektrisch leitenden, also galvanischen Kontakt zum strömenden Medium haben. Diese streifenartige Ausführung der Meßelektroden kann eine einstückige Ausführung sein, die Meßelektroden können aber auch aus mehreren Teilelektroden bestehen.

Die Anordnung der Meßelektroden relativ zur Deckschicht kann so sein, daß die in das Innere der Meßleitung gerichtete Oberfläche der Meßelektroden bündig ist zu der in das Innere der Meßleitung gerichteten Oberfläche der Deckschicht, die Meßelektroden also gleichsam vollständig in der Deckschicht integriert sind. Das strömende Medium findet also einen durchgängig glatten, Vorsprünge oder Rücksprünge nicht aufweisenden Strömungskanal vor. Es kann aber auch vorteilhaft sein, die Anordnung so zu treffen, daß die in das Innere der Meßleitung gerichtete Oberfläche der Meßelektroden in bezug auf die in das Innere der Meßleitung gerichtete Oberfläche der Deckschicht vorspringt oder zurückspringt. Dadurch können im Bereich der Meßelektroden Strömungssituationen entstehen, die dazu führen, daß die Meßelektroden die in dem strömenden Medium induzierte Meßspannung besonders gut erfassen können.

Funktionsnotwendig für ein magnetisch-induktives Durchflußmeßgerät der in Rede stehenden Art sind genau zwei Elektroden, senkrecht zum Magnetfeld und senkrecht zur Strömungsrichtung des strömenden Mediums. Es kann jedoch von Vorteil sein, zusätzlich zu den beiden funktionsnotwendigen Meßelektroden mindestens eine Referenzelektrode vorzusehen. Das kann sich besonders dann, aber nicht nur dann, empfehlen, wenn das erfindungsgemäße magnetisch-induktive Durchflußmeßgerät auch zur Leitfähigkeitsmessung, zur Füllstandsmessung, zur Leitfähigkeitsmessung und zur Füllstandsmessung oder nur zur Leitfähigkeitsmessung, zur Füllstandsmessung oder zur Leitfähigkeitsmessung und zur Füllstandsmessung verwendet werden soll. Davon unabhängig kann es von Vorteil sein, bei erfindungsgemäßen magnetisch-induktiven Durchflußmeßgeräten mehrere Meßelektroden in Strömungsrichtung des strömenden Mediums hintereinander anzuordnen, so daß nicht nur zwei Meßelektroden, sondern z. B. vier Meßelektroden oder gar sechs Meßelektroden vorgesehen sind. Bei einer solchen Anordnung kann man einerseits die von jeweils zwei Meßelektroden erfaßten Meßspannungen mitteln, was zu einem genaueren Meßergebnis führen kann. Die Anordnung von mehreren Meßelektroden in Strömungsrichtung des strömenden Mediums hintereinander kann auch den Vorteil haben, daß gleichsam mehrere Meßsystems zur Verfügung stehen, bei insgesamt vier Meßelektroden also zwei Meßsysteme, bei insgesamt sechs Meßelektroden also drei Meßsysteme. Das hat den Vorteil, daß ein solches magnetisch-induktives Durchflußmeßgerät auch dann funktionsfähig ist und bleibt, wenn die Durchflußmessung über zwei sich gegenüberliegende Meßelektroden, aus welchen Gründen auch immer, fehlerhaft ist oder gar ausfällt.

Wie schon ausgeführt, muß die im strömenden Medium induzierte, von den Meßelektroden erfaßte Meßspannung natürlich von den Meßelektroden abgegriffen werden, also vom "Entstehungsort", dem Inneren der Meßleitung, nach außen verbracht werden, damit die induzierte und erfaßte Meßspannung ausgewertet werden kann.

Eingangs ist ausgeführt, daß bei magnetisch-induktiven Durchflußmeßgeräten die Meßspannung galvanisch oder kapazitiv von den Meßelektroden abgegriffen werden kann. Bei den erfindungsgemäßen magnetisch-induktiven Durchflußmeßgeräten erfolgt ein galvanisches
Abgreifen. Folglich ist bei erfindungsgemäßen magnetisch-induktiven Durchflußmeßgeräten vorzugsweise den Meßelektroden jeweils mindestens ein nach außen führendes Anschlußelement zugeordnet. Im einzelnen können dazu die Meßelektroden, die Deckschicht und die Meßleitung jeweils mindestens eine Durchgangsbohrung aufweisen und die Anschlußelemente durch die Durchgangsbohrungen der Meßelektroden, der Deckschicht und der Meßleitung geführt sein. Bei dieser Ausführungsform können die Anschlußelemente mit einen im Inneren der Meßleitung auf den Meßelektroden aufliegenden, vorzugsweise linsenförmigen Kopf versehen sein. Eine andere Ausführungsform erfindungsgemäßer magnetisch-induktiver Durchflußmeßgeräte ist in bezug auf das Abgreifen der in dem strömenden Medium induzierten und von den Meßelektroden erfaßten Meßspannung dadurch gekennzeichnet, daß die Meßelektroden mit die Deckschicht und die Meßleitung durchdringenden, vorzugsweise kreiszylindrischen Anschlußaufnahmen versehen sind; diese Anschlußaufnahmen können vorzugsweise einstückig mit den Meßelektroden ausgeführt sein. Bei dieser Ausführungsform empfiehlt es sich dann, die Anschlußelemente bolzenförmig auszuführen und in die Anschlußaufnahmen der Meßelektroden einzustecken.
Zur Lehre der Erfindung gehört nicht nur das zuvor in verschiedenen Ausführungsformen beschriebenen magnetisch-induktive Durchflußmeßgerät, zur Lehre der Erfindung gehören vielmehr auch bevorzugte Verfahren zur Herstellung magnetisch-induktiver Durchflußmeßgeräte, die die Deckschicht, die Meßelektroden, die Realisierung der Deckschicht und der Meßelektroden und die Verbindung der Meßelektroden mit der Deckschicht im Fokus haben.

Zunächst ist ein nichterfindungsgemäßes Verfahren zur Herstellung eines magnetisch-induktiven Durchflußmeßgeräts der in Rede stehenden Art, bei dem die Deckschicht und die Meßelektroden aus Gummi bestehen, dadurch gekennzeichnet, daß die Meßelektroden in die Deckschicht einvulkanisiert oder auf die Deckschicht aufvulkanisiert werden. Es ist selbstverständlich, daß bei einem solchen magnetisch-induktiven Durchflußmeßgerät, bei dem also die Deckschicht und die Meßelektroden aus Gummi bestehen, auch, wie bei allen erfindungsgemäßen magnetisch-induktiven Durchflußmeßgeräten, dafür gesorgt sein muß, daß das Material der Meßelektroden eine wesentlich höhere elektrische Leitfähigkeit hat als das Material der Deckschicht, das für die Meßelektroden verwendete Material Gummi also mindestens einen die notwendige elektrische Leitfähigkeit verursachenden Zusatzstoff enthält.

Ein anderes bevorzugtes Verfahren zur Herstellung eines magnetisch-induktiven Durchflußmeßgeräts der in Rede stehenden Art, bei dem die Deckschicht und die Meßelektroden aus einem Polymer bestehen, ist dadurch gekennzeichnet, daß die Meßelektroden in die Deckschicht eingeschmolzen oder auf die Deckschicht aufgeschmolzen werden. Bei diesem Verfahren ist dadurch, daß die Deckschicht und die Meßelektroden aus einem Polymer bestehen, das realisiert, was weiter oben als eine wesentliche Lehre der Erfindung dargestellt worden ist, daß nämlich die Meßelektroden aus dem gleichen Material oder einem gleichartigen Material wie die Deckschicht bestehen.

Nach einer anderen Lehre der Erfindung können erfindungsgemäße magnetisch-induktive Durchflußmeßgeräte auch dadurch hergestellt werden, daß die Deckschicht und die Meßelektroden in einer Zwei-Komponenten-Einspritzung oder -Aufspritzung in einem Arbeitsgang realisiert werden.

Besondere Bedeutung kommt einem Verfahren zur Herstellung eines magnetisch-induktiven Durchflußmeßgeräts zu, das dadurch gekennzeichnet, daß das Material für die Meßelektroden im PVD-Verfahren oder im CVD-Verfahren auf die Deckschicht aufgebracht wird (zum PVD-Verfahren und zum CVD-Verfahren wird auf "BROCKHAUS DIE ENZYKLOPÄDIE", Zwanzigste, überarbeitete und aktualisierte Auflage, 1996, verwiesen, und zwar zum PVD-Verfahren auf den Siebzehnten Band, Seite 635, linke Spalte, und zum CVD-Verfahren auf den Fünften Band, Seite 33, linke Spalte.

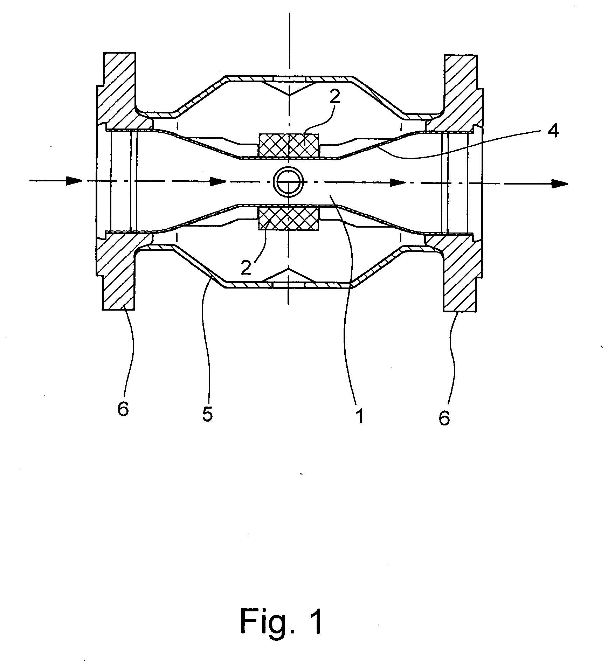

Im Stand der Technik ist die MID-Technologie (MID = "Moulded Interconnect Device"), insbesondere auch die 3D-MID-Technologie bekannt geworden (vgl. den Aufsatz "Von der flexiblen Leiterplattenlösung zur mechatronischen 3D-Einheit - Eine flexible und wirtschaftliche Alternative" von Dirk Bäcker, Polyscope' 10/08, Verlag: Binkert Medien AG, Schweiz, Ausgabe 10/2008, Seiten 18 und 19). Davon ausgehend ist ein nicht-erfindungsgemäßes zur Herstellung eines magnetisch-induktiven Durchflußmeßgeräts der in Rede stehenden Art dadurch gekennzeichnet, daß zuerst auf die innere Oberfläche der Meßleitung oder auf einen Teil der inneren Oberfläche der Meßleitung aus einem geeignete Zusatzstoffe enthaltenden Material eine für das MID-Verfahren geeignete Deckschicht aufgebracht wird, z. B. im Spritzgußverfahren, daß dann die im Material der Deckschicht enthaltenen Zusatzstoffe aktiviert werden und daß abschließend auf die - wie beschrieben vorbehandelte - Deckschicht die Meßelektroden aufgebracht werden. Dabei empfiehlt es sich dann, die im Material der Deckschicht enthaltenen Zusatzstoffe durch ein Laserstrukturierungsverfahren zu aktivieren (vgl. die zuvor angegebene Literaturstelle).
Bei den magnetisch-induktiven Durchflußmeßgeräten, von denen die Erfindung ausgeht, ist es wichtig, daß zwischen der Meßleitung und der Deckschicht ein besonders guter, bei allen betrieblichen Bedingungen haltbarer und dichter, insbesondere auch rißfreier Verbund gegeben ist. Das gilt in gleicher Weise für den Verbund zwischen der Deckschicht und den Meßelektroden bzw. zwischen den Meßelektroden und der Deckschicht, was erreicht wird, wenn nach einem der zuvor dargestellten Verfahren fachmännisch gearbeitet wird. Der zuvor beschriebene Verbund zwischen der Deckschicht und den Meßelektroden bzw. zwischen den Meßelektroden und der Deckschicht führt zu dem gewünschten, häufig auch notwendigen Ergebnis, daß sich feste, flüssige und gasförmige Stoffe, insbesondere Verunreinigungen jeder Art, insbesondere auch Bakterien, nicht festsetzen können.
Im einzelnen gibt es nun eine Mehrzahl verschiedener Möglichkeiten, erfindungsgemäße magnetisch-induktive Durchflußmeßgeräte zu realisieren, auszugestalten, weiterzubilden und herzustellen. Dazu wird auf den unabhängigen Patentanspruch 1 und auf die diesem nachgeordneten Patentansprüche sowie auf die nachfolgende Beschreibung eines besonders bevorzugten Ausführungsbeispiels eines erfindungsgemäßen magnetisch-induktiven Durchflußmeßgeräts in Verbindung mit den Zeichnungen verwiesen, in denen zeigen
- Fig. 1: stark schematisiert, einen Längsschnitt durch das bevorzugte Ausführungsbeispiel eines erfindungsgemäßen magnetisch-induktiven Durchflußmeßgeräts,
- Fig. 2: in gegenüber der Fig. 1 vergrößerter Darstellung, stark schematisiert, perspektivisch den mittleren Teil der Meßleitung des magnetisch-induktiven Durchflußmeßgeräts nach Fig. 1,
- Fig. 3: eine der Fig. 2 entsprechende Darstellung des mittleren Teils der Meßleitung des magnetisch-induktiven Durchflußmeßgeräts nach Fig. 1, mit nur angedeuteten weiteren Details,
- Fig. 4: eine erste bevorzugte Realisierung des Abgreifens der in dem strömenden Medium induzierten, von den Meßelektroden erfaßten Meßspannung und
- Fig. 5: eine zweite bevorzugte Realisierung des Abgreifens der in dem strömenden Medium induzierten, von den Meßelektroden erfaßten Meßspannung.
Das in der Fig. 1 - im wesentlichen nur schematisch - dargestellte magnetische-induktive Durchflußmeßgerät ist bestimmt zur Durchflußmessung eines strömenden Mediums. Es ist aber auch geeignet zur Durchflußmessung und zur Leitfähigkeitsmessung, zur Durchflußmessung und zur Füllstandsmessung, zur Durchflußmessung, zur Leitfähigkeitsmessung und zur Füllstandsmessung, zur Leitfähigkeitsmessung (ohne eine Durchflußmessung), zur Füllstandsmessung (ohne eine Durchflußmessung) sowie zur Leitfähigkeitsmessung und zur Füllstandsmessung (ohne eine Durchflußmessung).
Funktionsnotwendig weist das in der Fig. 1 dargestellte magnetisch-induktive Durchflußmeßgerät auf eine Meßleitung 1, eine im einzelnen nicht dargestellte Magnetfelderzeugungseinrichtung zur Erzeugung eines die Meßleitung 1 wenigstens teilweise durchsetzenden Magnetfeldes, zu der, in der Fig. 1 nur angedeutet, zwei Magnetspulen 2 gehören, und zwei Meßelektroden 3 zum Erfassen und Abgreifen einer in dem strömenden Medium induzierten Meßspannung. Wesentlich für das in der Fig. 1 dargestellte magnetische-induktive Durchflußmeßgerät ist auch, daß die Meßleitung 1 innen zumindest teilweise, im dargestellten Ausführungsbeispiel insgesamt mit einer elektrisch isolierenden Deckschicht 4 versehen ist.

Zu dem in der Fig. 1 dargestellten magnetisch-induktiven Durchflußmeßgerät gehört auch ein die Meßleitung 1, die Magnetfelderzeugungseinrichtung und die Meßelektroden 3 aufnehmendes Gehäuse 5, das einen kreisförmigen Querschnitt hat und im Ausführungsbeispiel beidseitig mit Flanschen 6 versehen ist.

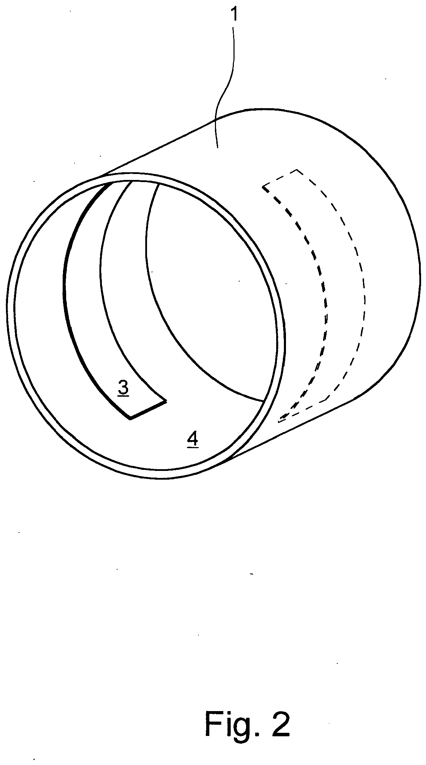

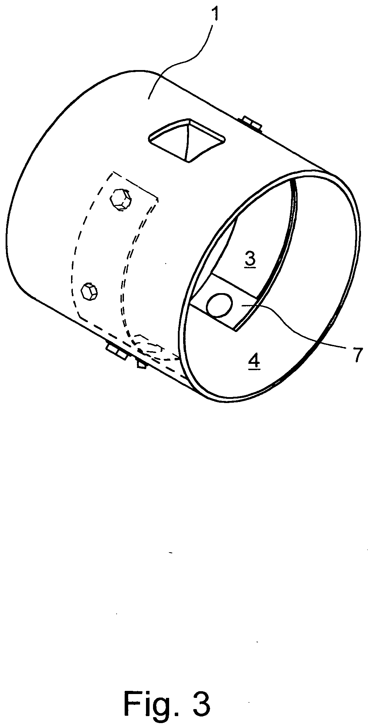

Nach einer ersten Lehre der Erfindung sind bei dem erfindungsgemäßen magnetisch-induktiven Durchflußmeßgerät, wie dies die Fig. 2 und 3 zeigen, die Meßelektroden 3 streifenartig ausgeführt. Sie haben eine Länge - in Umfangsrichtung der Meßleitung 1 - von etwas weniger als einem Viertel des Meßleitungsumfangs bis etwas mehr als der Hälfte des Meßleitungsumfangs, und sie haben direkten, d. h. elektrisch leitenden, also galvanischen Kontakt zum strömenden Medium.

Nach einer weiteren Lehre der Erfindung ist für das erfindungsgemäße magnetisch-induktive Durchflußmeßgerät wesentlich, daß die Meßelektroden 3 aus dem gleichen Material oder einem gleichartigen Material wie die Deckschicht 4 bestehen und das Material der Meßelektroden 3 eine wesentlich höhere elektrische Leitfähigkeit hat als das Material der Deckschicht 4. Im Ausführungsbeispiel ist die elektrische Leitfähigkeit des Materials der Meßelektroden 3 in radialer Richtung, in Strömungsrichtung des strömenden Mediums und in Richtung des Meßleitungsumfangs gleich. Denkbar ist es aber auch, die elektrische Leitfähigkeit des Materials der Meßelektroden 3 in radialer Richtung, in Strömungsrichtung des strömenden Mediums und/oder in Richtung des Meßleitungsumfangs veränderlich zu machen.

Für das bevorzugte Ausführungsbeispiel eines erfindungsgemäßen magnetisch-induktiven Durchflußmeßgeräts gilt weiter, daß die elektrische Leitfähigkeit des Materials der Meßelektroden 3 durch eine besondere chemische und/oder physikalische Behandlung erhöht ist. Von Bedeutung ist auch, daß die elektrische Leitfähigkeit des Materials der Meßelektroden 3 um etwa das Zweifache bis etwa das Zehnfache höher als die elektrische Leitfähigkeit des strömenden Mediums.

In den Figuren ist nicht erkennbar, was als Material für die Meßelektroden 3 und für die Deckschicht 4 verwendet ist. Auch kann den Figuren nicht entnommen werden, wie erfindungsgemäß dafür gesorgt ist, daß bei dem erfindungsgemäßen magnetisch-induktiven Durchflußmeßgerät das Material der Meßelektroden 3 eine wesentlich höhere elektrische Leitfähigkeit als das Material der Deckschicht 4 hat.

Wie die Fig. 2 und 3 zeigen, haben im dargestellten Ausführungsbeispiel die Meßelektroden 3 - auf die Meßelektroden 3 in gestreckter Form gesehen - eine rechteckige Form. Sie könnten aber auch eine über den Meßleitungsumfang veränderliche Form haben, z. B. eine dreieckige oder eine rhombische Form. Nicht dargestellt ist, daß die Meßelektroden 3 an ihren Enden abgerundet sein können oder in einen kreisförmigen Querschnitt übergehen können.

Im dargestellten Ausführungsbeispiel - Fig. 2 und Fig. 3 - sind die Meßelektroden 3 über ihre gesamte Länge - in Umfangsrichtung der Meßleitung 1 - einstückig ausgeführt. Möglich ist es jedoch, die Meßelektroden aus mehreren Teilelektroden aufzubauen.

Bisher ist ein magnetisch-induktives Durchflußmeßgerät beschrieben worden, das zwei Meßelektroden 3 aufweist. Zusätzlich zu den Meßelektroden 3 können aber auch, wie das in Fig. 3 angedeutet ist, noch Referenzelektroden 7 verwirklicht sein. Das gilt insbesondere dann, wenn das erfindungsgemäße magnetisch-induktive Durchflußmeßgerät nicht nur zur Durchflußmessung eines strömenden Mediums, sondern auch zur Leitfähigkeitsmessung, auch zur Füllstandsmessung oder auch zur Leitfähigkeitsmessung und zur Füllstandsmessung oder nur zur Leitfähigkeitsmessung, nur zur Füllstandsmessung oder nur zur Leitfähigkeitsmessung und zur Füllstandsmessung eingesetzt werden soll, was auch ohne weiteres möglich ist.

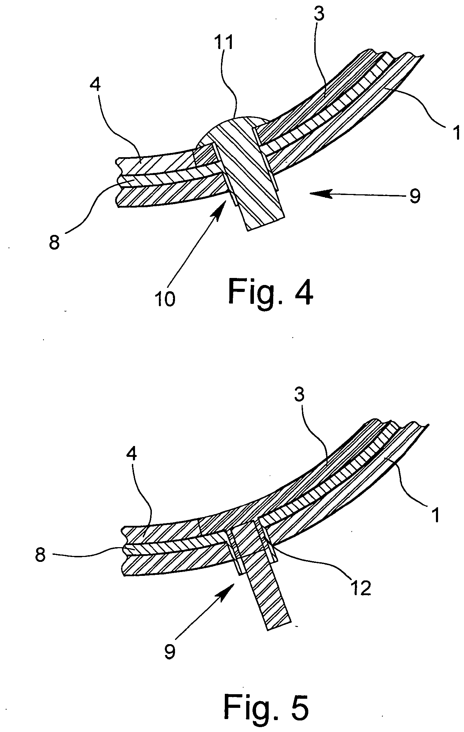

In den Fig. 2 und 3 ist angedeutet, aus den Fig. 4 und 5 ergibt sich das deutlicher, daß im dargestellten Ausführungsbeispiel die in das Innere der Meßleitung 1 gerichtete Oberfläche der Meßelektroden bündig ist zu der in das Innere der Meßleitung 1 gerichteten Oberfläche der Deckschicht 4. Es ist jedoch auch möglich, die Dimensionierung so zu treffen, daß die in das Innere der Meßleitung 1 gerichtete Oberfläche der Meßelektroden 3 in bezug auf die in das Innere der Meßleitung 1 gerichtete Oberfläche der Deckschicht 4 vorspringt oder zurückspringt.

Bei dem erfindungsgemäßen magnetisch-induktiven Durchflußmeßgerät erfolgt das Abgreifen der in dem strömenden Medium induzierten und von den Meßelektroden 3 erfaßten Meßspannung galvanisch. Im dargestellten Ausführungsbeispiel ist deshalb den Meßelektroden 3 jeweils ein nach außen führendes Anschlußelement 8 zugeordnet.

Im Ausführungsbeispiel nach Fig. 4 ist das im einzelnen so realisiert, daß die Meßelektroden 3, die Deckschicht 4 und die Meßleitung 1 jeweils eine Durchgangsbohrung 9 aufweisen und die Anschlußelemente 8 durch die Durchgangsbohrungen 9 der Meßelektroden 3, der Deckschicht 4 und der Meßleitung 1 geführt sind. Dabei sind, wie das die Fig. 4 zeigt, die Anschlußelemente 8 mit einem in Inneren der Meßleitung 1 auf den Meßelektroden 3 aufliegen, linsenförmigen Kopf versehen.

Demgegenüber zeigt die Fig. 5 eine Realisierung des galvanischen Abgreifens der im strömenden Medium induzierten und von den Meßelektroden 3 erfaßten Meßspannung, die dadurch gekennzeichnet ist, daß die Meßelektroden 3 mit die Deckschicht 4 und die Meßleitung 1 durchdringenden, kreiszylindrischen Anschlußaufnahmen versehen sind. Dabei sind die Anschlußelemente 8 bolzenförmig ausgeführt und in die Anschlußaufnahmen 11 der Meßelektroden 3 eingesteckt.

## Patentansprüche

1. Magnetisch-induktives Durchflussmessgerät zur Durchflussmessung eines strömenden Mediums, mit einer Messleitung, mit einer Magnetfelderzeugungseinrichtung zur Erzeugung eines die Messleitung wenigstens teilweise durchsetzenden Magnetfeldes und mit zwei Messelektroden zum Erfassen und Abgreifen einer in dem strömenden Medium induzierten Messspannung, wobei die Messleitung innen zumindest teilweise mit einer elektrisch isolierenden Deckschicht versehen ist, wobei die Messspannung galvanisch oder kapazitiv von den Messelektroden abgegriffen werden kann und wobei die Messelektroden streifenartig ausgeführt sind, eine Länge - in Umfangsrichtung der Messleitung - von etwas weniger als einem Viertel des Messleitungsumfangs bis etwas mehr als der Hälfte des Messleitungsumfangs haben und direkten, d. h. elektrisch leitenden, also galvanischen Kontakt zum strömenden Medium haben,
**dadurch gekennzeichnet,**
**dass** die Messelektroden (3) aus dem gleichen Material oder einem gleichartigen Material wie die Deckschicht (4) bestehen, dass das Material der Messelektroden (3) eine wesentlich höhere elektrische Leitfähigkeit hat als das Material der Deckschicht (4) und dass die elektrische Leitfähigkeit des Materials der Messelektroden (3) durch eine besondere chemische und/oder physikalische Behandlung, ausgenommen durch das Beifügen mindestens eines Zusatzstoffes, erhöht ist.

2. Magnetisch-induktives Durchflussmessgerät nach Anspruch 1, **dadurch gekennzeichnet, dass** die elektrische Leitfähigkeit des Materials der Messelektroden (3) in radialer Richtung, in Strömungsrichtung des strömenden Mediums und/oder in Richtung des Messleitungsumfangs gleich oder veränderlich ist.

3. Magnetisch-induktives Durchflussmessgerät nach Anspruch 1 oder 2, **dadurch gekennzeichnet, dass** die elektrische Leitfähigkeit des Materials der Messelektroden (3) um etwa das Zweifache bis etwa das Zehnfache höher ist als die elektrische Leitfähigkeit des strömenden Mediums.

4. Magnetisch-induktives Durchflussmessgerät nach einem der Ansprüche 1 bis 3, **dadurch gekennzeichnet, dass** als Material für die Messelektroden (3) ein Polymer verwendet ist, z. B. Polyurethan (PUR), Polyamid (CA), Polyethylen / Polyethen (PE), Polypropylen / Polypropen (PP), PFA, PTFE, ETFE, vorzugsweise ein Polymer mit extrinsischer Leitfähigkeit, ein Material mit intrinsischer Leitfähigkeit oder ein Material mit extrinsischer und intrinsischer Leitfähigkeit verwendet ist.

5. Magnetisch-induktives Durchflussmessgerät nach einem der Ansprüche 1 bis 4, **dadurch gekennzeichnet, dass** die Messelektroden (3) - auf die Messelektroden (3) in gestreckter Form gesehen - eine rechteckige Form oder eine über den Messleitungsumfang veränderliche Form haben, z. B. eine dreieckige oder eine rhombische Form, und/oder dass die Messelektroden (3) einen elliptischen, einen rechteckigen oder einen achteckigen Querschnitt aufweisen.

6. Magnetisch-induktives Durchflussmessgerät nach einem der Ansprüche 1 bis 5, **dadurch gekennzeichnet, dass** die Messelektroden an ihren Enden abgerundet sind oder in einen kreisförmigen Querschnitt übergehen und/oder aus mehreren Teilelektroden bestehen.

7. Magnetisch-induktives Durchflussmessgerät nach einem der Ansprüche 1 bis 6, **dadurch gekennzeichnet, dass** die in das Innere der Messleitung (1) gerichtete Oberfläche der Messelektroden (3) bündig ist zu der in das Innere der Messleitung (1) gerichteten Oberfläche der Deckschicht (4) oder in Bezug auf die in das Innere der Messleitung gerichtete Oberfläche der Deckschicht vorspringt oder zurückspringt.

8. Magnetisch-induktives Durchflussmessgerät nach einem der Ansprüche 1 bis 7, das mehrere Messelektroden in Strömungsrichtung des strömenden Mediums hintereinander angeordnet sind.

9. Magnetisch-induktives Durchflussmessgerät nach einem der Ansprüche 1 bis 8, **dadurch gekennzeichnet, dass** die Messelektroden (3), die Deckschicht (4) und die Messleitung (1) jeweils mindestens eine Durchgangsbohrung (9) aufweisen und Anschlusselemente (8) durch die Durchgangsbohrungen (9) der Messelektroden (3), der Deckschicht (4) und der Messleitung (1) geführt sind.

10. Magnetisch-induktives Durchflussmessgerät nach Anspruch 9, **dadurch gekennzeichnet, dass** die Anschlusselemente (8) mit einem im Inneren der Messleitung (1) auf den Messelektroden (3) aufliegenden, vorzugsweise linsenförmigen Kopf (10) versehen sind

11. Magnetisch-induktives Durchflussmessgerät nach einem der Ansprüche 1 bis 9, **dadurch gekennzeichnet, dass** die Messelektroden (3) mit die Deckschicht (4) und die Messleitung (1) durchdringenden, vorzugsweise kreiszylindrischen Anschlussaufnahmen (11) versehen sind und dass vorzugsweise die Anschlusselemente (8) bolzenförmig ausgeführt und in die Anschlussaufnahmen (11) der Messelektroden (3) eingesteckt sind.

## Claims

1. Magnetic-inductive flowmeter for measuring the rate of flow of a flowing medium, comprising a measurement line, a magnetic field generating means for generating a magnetic field which at least partially penetrates the measurement line, and two measurement electrodes for detecting and tapping a measurement voltage which has been induced in the flowing medium, wherein an electrically insulating cover layer is provided at least partially over the inside of the measurement line, wherein the measuring voltage can be galvanically or capacitively tapped by the measurement electrodes and wherein the measurement electrodes are strip-shaped having a length in a peripheral direction of the measurement line of between about just under one fourth of the periphery of the measurement line up to just about over half of the periphery of the measurement line and are in direct i.e. electrically-conducting, galvanic contact with the flowing medium
**characterized in**
**that** the measurement electrodes (3) are made of the same material or similar material as the cover layer (4) and the material of the measurement electrodes (3) has a much higher electrical conductivity than the material of the cover layer (4) and that the electrical conductivity of the material of the measurement electrodes (3) is increased by a special chemical and/or physical treatment, with the exception of adding at least one additive.

2. Magnetic-inductive flowmeter according to claim 1, **characterized in that** the material of the measurement electrodes (3) has a constant or varying electrical conductivity in the radial direction, in the direction of flow of the flowing medium and/or in the circumferential direction of the measurement line.

3. Magnetic-inductive flowmeter according to claim 1 or 2, **characterized in that** the electrical conductivity of the material of the measurement electrodes (3) is approximately twice to about ten times higher than the electrical conductivity of the flowing medium.

4. Magnetic-inductive flowmeter according to any one of claims 1 to 3, **characterized in that** the material for the measurement electrodes (3) is a polymer e.g. polyurethane (PUR), polyamide (CA), polyethylene/polyethene (PE), polypropylene/polypropene (PP), PFA, PTFE, ETFE, preferably a polymer with extrinsic conductivity, a material with intrinsic conductivity or a material with extrinsic and intrinsic conductivity.

5. Magnetic-inductive flowmeter according to any one of claims 1 to 4, **characterized in that** the measurement electrodes (3) - when the measurement electrodes (3) are viewed flat - have a rectangular shape, or have a shape varying over the periphery of the measuring line, e.g. a triangular or rhombic form, and/or the measurement electrodes (3) have a cross section that is elliptical, rectangular or octagonal.

6. Magnetic-inductive flowmeter according to any one of claims 1 to 5, **characterized in that** the measuring electrodes are rounded on their ends or merge into a circular cross section and/or consist of multiple partial electrodes.

7. Magnetic-inductive flowmeter according to any one of claims 1 to 6, **characterized in that** a surface of the measurement electrodes (3) which faces into the interior of the measurement line (1) is flush with a surface of the cover layer (4) which faces into the interior of the measurement line (1) or projects or recoils in respect to the surface of the cover layer facing into the interior of the measuring line.

8. Magnetic-inductive flowmeter according to any one of claims 1 to 7, **characterized in that** multiple measuring electrodes are arranged consecutively in the direction of flow of the flowing medium.

9. Magnetic-inductive flowmeter according to any one of claims 1 to 8, **characterized in that** the measurement electrodes (3), the cover layer (4) and the measurement line (1) each have at least one respective through hole (9) and terminal elements (8) are routed through the through holes (9) of the measuring electrodes (3), the cover layer (4) and the measurement line (1).

10. Magnetic-inductive flowmeter according to claim 10, **characterized in that** the terminal elements (8) are provided with a preferably lens-shaped head (10) which rests on the measurement electrodes (3) within the measurement line (1).

11. Magnetic-inductive flowmeter according to any one of claims 1 to 9, **characterized in that** the measurement electrodes (3) are provided with preferably cylindrical terminal receivers (11) which penetrate the measurement line (1) and the cover layer (4) and that the terminal elements (8) are made pin-shaped and are inserted into the terminal receivers (11) of the measurement electrodes (3).

## Revendications

1. Débitmètre magnéto-inductif destiné à la mesure du débit d'un fluide en écoulement, comprenant une conduite de mesure, comprenant un dispositif de génération de champ magnétique destiné à générer un champ magnétique qui traverse au moins partiellement la conduite de mesure, et comprenant deux électrodes de mesure destinées à acquérir et à prélever une tension de mesure induite dans le fluide en écoulement, la conduite de mesure étant pourvue à l'intérieur au moins partiellement d'une couche de recouvrement électriquement isolante, la tension de mesure pouvant être prélevée de manière galvanique ou capacitive par les électrodes de mesure et les électrodes de mesure étant réalisées sous la forme de bandes, ayant une longueur - dans la direction périphérique de la conduite de mesure - d'environ moins d'un quart de la circonférence de la conduite de mesure à environ plus de la moitié de la circonférence de la conduite de mesure et ayant un contact direct, c'est-à-dire électriquement conducteur, donc galvanique avec le fluide en écoulement,
**caractérisé**
**en ce que** les électrodes de mesure (3) se composent du même matériau que ou d'un matériau similaire à celui de la couche de recouvrement (4), **en ce que** le matériau des électrodes de mesure (3) présente une conductivité électrique considérablement supérieure à celle du matériau de la couche de recouvrement (4) et **en ce que** la conductivité électrique du matériau des électrodes de mesure (3) est augmentée par un traitement notamment chimique et/ou physique, à l'exception de l'ajout d'au moins un additif.

2. Débitmètre magnéto-inductif selon la revendication 1, **caractérisé en ce que** la conductivité électrique du matériau des électrodes de mesure (3) dans la direction radiale, dans la direction d'écoulement du fluide en écoulement et/ou dans la direction de la circonférence de la conduite de mesure est identique ou modifiable.

3. Débitmètre magnéto-inductif selon la revendication 1 ou 2, **caractérisé en ce que** la conductivité électrique du matériau des électrodes de mesure (3) est supérieure d'environ deux fois à environ dix fois à la conductivité électrique du fluide en écoulement.

4. Débitmètre magnéto-inductif selon l'une des revendications 1 à 3, **caractérisé en ce que** le matériau utilisé pour les électrodes de mesure (3) est un polymère, par exemple du polyuréthane (PUR), du polyamide (CA), du polyéthylène/polyéthène (PE), du polypropylène/polypropène (PP), du PFA, PTFE, ETFE, de préférence un polymère à conductivité extrinsèque, un matériau à conductivité intrinsèque ou un matériau à conductivité extrinsèque et intrinsèque.

5. Débitmètre magnéto-inductif selon l'une des revendications 1 à 4, **caractérisé en ce que** les électrodes de mesure (3) - vues sur les électrodes de mesure (3) en forme étirées - présentent une forme rectangulaire ou une forme variable sur le pourtour de la conduite de mesure, par exemple une forme triangulaire ou rhomboïde, et/ou **en ce que** les électrodes de mesure (3) présentent une section transversale elliptique, rectangulaire ou octogonale.

6. Débitmètre magnéto-inductif selon l'une des revendications 1 à 5, **caractérisé en ce que** les électrodes de mesure sont arrondies au niveau de leurs extrémités ou transitent en une section transversale circulaire et/ou se composent de plusieurs électrodes partielles.

7. Débitmètre magnéto-inductif selon l'une des revendications 1 à 6, **caractérisé en ce que** la surface des électrodes de mesure (3) dirigée dans l'intérieur de la conduite de mesure (1) est à fleur de la surface de la couche de recouvrement (4) dirigée dans l'intérieur de la conduite de mesure (1) ou alors fait saillit ou est en retrait par rapport à la surface de la couche de recouvrement dirigée dans l'intérieur de la conduite de mesure.

8. Débitmètre magnéto-inductif selon l'une des revendications 1 à 7, **caractérisé en ce que** plusieurs électrodes de mesure sont disposées les unes derrière les autres dans la direction d'écoulement du fluide en écoulement.

9. Débitmètre magnéto-inductif selon l'une des revendications 1 à 8, **caractérisé en ce que** les électrodes de mesure (3), la couche de recouvrement (4) et la conduite de mesure (1) possèdent respectivement au moins un trou traversant (9) et des éléments de raccordement (8) sont passés à travers les trous traversants (9) des électrodes de mesure (3), de la couche de recouvrement (4) et de la conduite de mesure (1) .

10. Débitmètre magnéto-inductif selon la revendication 9, **caractérisé en ce que** les éléments de raccordement (8) sont pourvus d'une tête (10), de préférence de forme lenticulaire, reposant sur les électrodes de mesure (3) à l'intérieur de la conduite de mesure (1).

11. Débitmètre magnéto-inductif selon l'une des revendications 1 à 9, **caractérisé en ce que** les électrodes de mesure (3) sont pourvues de logements de raccordement (11), de préférence cylindriques circulaires, qui pénètrent dans la couche de recouvrement (4) et la conduite de mesure (1) et **en ce que** les éléments de raccordement (8) sont de préférence réalisés en forme de goujons et sont insérés dans les logements de raccordement (11) des électrodes de mesure (3) .
